# DEMANDE DE BREVET EUROPEEN

(11) **EP 2 368 764 A1**
(43) Date de publication de la demande: **28.09.2011**
(21) Numéro de dépôt: 10290150.1
(22) Date de dépôt: 22.03.2010
(51) Int. Cl.: B60R 9/042

(54) **Monte-charge pour toit d'un véhicule terrestre**

(71) Demandeur: Zignani, Christian, 92320 Chatillon (FR)
(72) Inventeur: Zignani, Christian, 92320 Chatillon (FR)
(74) Mandataire: Hammond, William

(57) **Abrégé**

L'invention concerne un monte-charge pour toit d'un véhicule terrestre, qui est notamment remarquable en ce qu'il comporte un support (1) oblong de charge qui est disposé en position de transport sensiblement à l'horizontale sur le toit (2) du véhicule et qui est articulé à l'extrémité d'un bras (6) pivotant dont l'autre extrémité est articulée sur le véhicule ou sur un élément (3) fixé à celui-ci, et en ce qu'au moins un vérin (9) d'actionnement est aménagé sur le véhicule de manière à agir sur le bras (6) pour entraîner le pivotement dudit bras dans les deux sens, tandis qu'un moyen de guidage (13) est aménagé à l'arrière du toit (2) du véhicule de telle sorte que le pivotement du bras par l'action du vérin entraîne le basculement du support (1) qui est guidé par le moyen de guidage (13), ledit support passant ainsi selon le sens de pivotement, de la position de transport sensiblement à l'horizontale sur le toit du véhicule à une position de chargement oblique ou sensiblement verticale à l'arrière du véhicule, ou réciproquement.

## Description

L'invention concerne un monte-charge pour toit d'un véhicule terrestre et en particulier d'un véhicule utilitaire tel qu'une camionnette ou un camion.

II n'est pas aisé de monter manuellement des charges sur le toit d'un véhicule utilitaire muni classiquement de barres de toit.

Un tel chargement nécessite généralement d'être au moins deux personnes et d'utiliser une échelle.

En outre, le chargement comme le déchargement d'objets oblongs comme des tubes ou une échelle, nécessitent un dégagement important derrière le véhicule, ce qui n'est pas toujours possible.

C'est pourquoi l'inventeur a cherché et mis au point un dispositif à entraînement motorisé qui facilite le chargement et le déchargement et réduit l'espace nécessaire pour ces opérations.

Le monte-charge selon l'invention est notamment remarquable en ce qu'il comporte un support oblong de charge qui est disposé en position de transport sensiblement à l'horizontale sur le toit du véhicule et qui est articulé à l'extrémité d'un bras pivotant dont l'autre extrémité est articulée sur le véhicule ou sur un élément fixé à celui-ci, et en ce qu'au moins un vérin d'actionnement est aménagé sur le véhicule de manière à agir sur le bras pour entraîner le pivotement dudit bras dans les deux sens, tandis qu'un moyen de guidage est aménagé à l'arrière du toit du véhicule de telle sorte que le pivotement du bras par l'action du vérin entraîne le basculement du support qui est guidé par le moyen de guidage, ledit support passant ainsi selon le sens de pivotement, de la position de transport sensiblement à l'horizontale sur le toit du véhicule à une position de chargement oblique ou sensiblement verticale à l'arrière du véhicule, ou réciproquement.

Selon un mode de réalisation avantageux, l'articulation du bras pivotant sur le véhicule ou sur l'élément fixé à celui-ci est aménagé vers l'arrière du véhicule par rapport à son articulation au support en position de transport, le vérin d'actionnement étant articulé vers l'arrière et sur une partie fixe par rapport au véhicule tandis que l'extrémité de sa tige est articulée au bras pivotant de manière telle que le pivotement d'avant en arrière et respectivement d'arrière en avant dudit bras, entraînant le basculement correspondant du support, est assuré par la rétraction de la tige du vérin et respectivement son extension, ledit vérin ayant un léger mouvement de pivotement en passant d'une position à l'autre.

Dans ce cas par exemple et pour des raisons qui seront évoquées ci-après, une butée fixe par rapport au véhicule est prévue pour limiter le pivotement du vérin lorsque le support est en position horizontale de transport.

Pour s'adapter à toutes les surfaces de roulement même accidentées et pour limiter les efforts au début du passage de la position de charge à la position de transport, l'amplitude angulaire de pivotement du bras qui est fonction de l'extension ou de la rétraction maximale du vérin, le positionnement de son articulation au support et la longueur de ce dernier, le tout par rapport à la hauteur du véhicule, sont choisis de manière telle que l'extrémité arrière dudit support reste à distance du plan de roulement du véhicule, en position de chargement.

De cette façon en effet, on peut si nécessaire faire reposer la charge au sol tout en la fixant au support avant d'actionner le vérin, le poids de la charge n'agissant ainsi pas ou peu sur le support lors du passage de la position de charge à la position de transport.

Selon un mode de réalisation, le moyen de guidage du support disposé à l'arrière du véhicule comporte un rouleau. Toutefois, il pourrait aussi s'agir d'un autre moyen de roulement, ou d'un moyen de glissement, ou similaire.

Par exemple, le support de charge comporte deux longerons reliés entre eux à intervalles réguliers par des barreaux.

Afin d'équiper facilement un véhicule d'un monte-charge selon l'invention, par exemple l'articulation au véhicule du bras pivotant, l'articulation fixe du vérin, la butée de pivotement de ce dernier et le moyen de guidage du support sont aménagés sur un châssis fixé sur le toit du véhicule, ledit châssis pouvant notamment être constitué d'une poutre ou comporter un poutre, de section en U, tandis qu'il peut être disposé sur des barres de toit installées sur le véhicule.

L'invention sera bien comprise et d'autres particularités apparaîtront à la lecture de la description qui va suivre et qui se réfère aux dessins annexés dans lesquels :
- la figure 1 représente en élévation un monte-charge selon l'invention, en position de transport, installé sur le toit d'un véhicule,
- la figure 2 montre le monte-charge de la figure 1 en position de chargement,
- la figure 3 correspond à plus petite échelle au monte-charge de la figure 2 avec schématisation de l'arrière complet du véhicule,
- la figure 4 est une vue par l'arrière du véhicule équipé, tel que représenté sur la figure selon la figure 3,
- la figure 5 montre un châssis destiné à être installé sur le toit du véhicule et sur lequel sont fixés divers éléments du monte-charge en position de transport, mais sans le support pour plus de clarté.

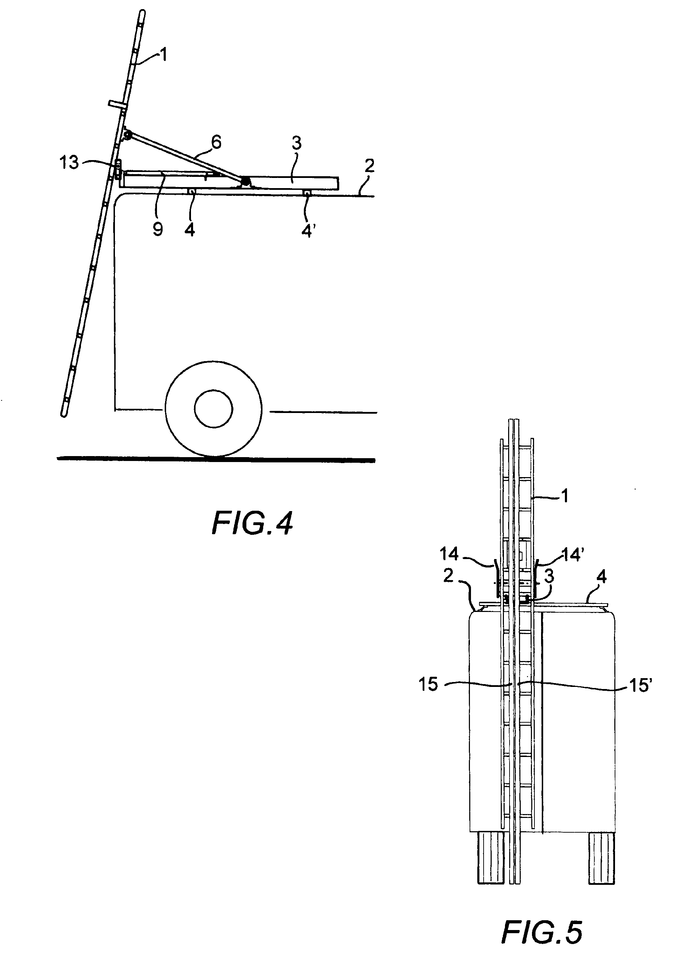

Le monte-charge selon l'invention comporte dans le mode de réalisation représenté, un support de charge 1 sous la forme ici d'une échelle, c'est-à-dire comportant deux longerons reliés régulièrement entre eux par des barreaux, comme le montre bien la figure 4. Il est clair toutefois que cette forme n'est nullement obligatoire.

Le support 1 est destiné à être disposé sur le toit 2 d'un véhicule.

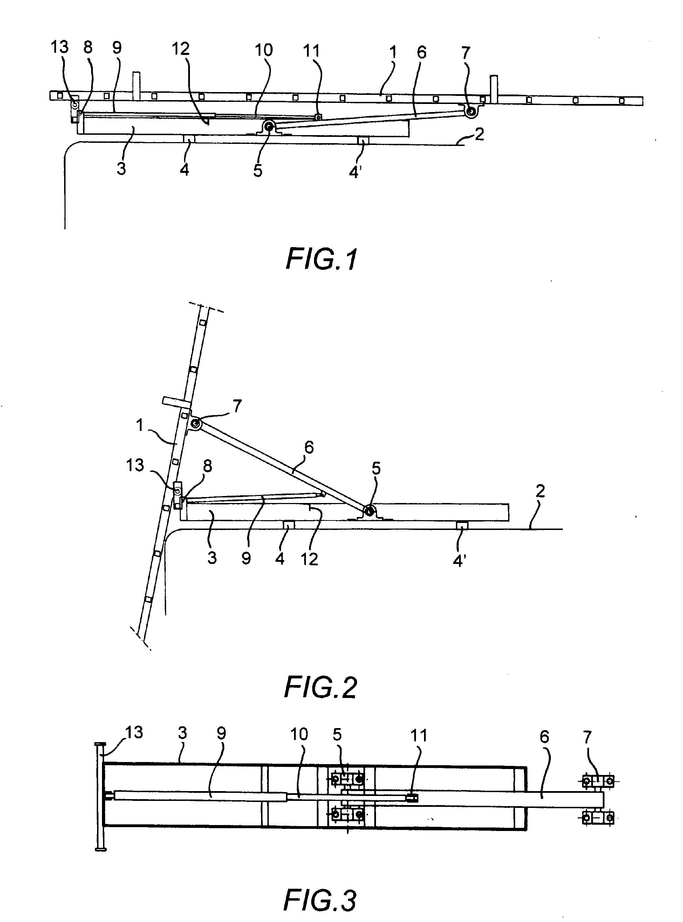

Pour faciliter la mise en place sur le toit 2, le monte-charge selon l'invention est aménagé sur un châssis 3 (figure 5) ici en forme de poutre à section en U (figure 4) prévue pour être fixée par exemple sur des barres 4, 4' de toit (figures 1 à 4) dudit véhicule de manière à s'étendre sensiblement jusqu'à l'extrémité arrière dudit toit.

Sur le châssis 3, est prévu une articulation 5 pour un bras 6 monté pivotant d'avant en arrière et réciproquement, l'extrémité dudit bras 6 opposée à l'articulation 5 étant articulée en 7 au support 1.

A l'extrémité arrière du châssis 2, est articulé en 8 un vérin 9 (électrique, pneumatique ou hydraulique) dont l'extrémité de la tige 10 est articulée en 11 au bras 6.

Comme le montre bien la figure 1, en position de transport, le support 1 se trouve sensiblement à l'horizontale et dans cette position, l'articulation 5 du bras 6 au châssis 3 est disposée vers l'arrière par rapport à son articulation 7 au support, ledit bras 6 étant en position pivotée vers l'avant. Toujours dans cette position, le vérin 9 dont la tige 10 est en extension se trouve également sensiblement à l'horizontale, en étant ici retenu par une butée 12 du châssis 3 de manière à le maintenir dans une position de départ convenable lors du changement de position, vers la position de chargement dont il sera question ci-après.

A l'arrière du châssis 3, est aménagé un moyen de guidage du support 1 sous forme ici d'un rouleau 13 (figures 1, 2, 4 et 5) disposé entre deux flasques 14, 14' (figure 4).

Toutefois il est clair que ce moyen de guidage comme déjà dit pourrait être un moyen de roulement d'un autre type ou un moyen de glissement, ...

Le fonctionnement est maintenant simple à comprendre.

A partir de la position de transport de la figure 1, il suffit de commander le vérin 9 (par une commande par exemple disposée à l'intérieur du véhicule) de telle sorte que la tige 10 dudit vérin se rétracte, ce qui entraîne le pivotement de l'avant vers l'arrière du bras 6.

Au cours du pivotement précité, le support 1 bascule en roulant sur le rouleau 13 jusqu'à prendre la position de chargement représentée sur les figures 2 à 4.

Pour prendre cette position, le vérin 9 a en outre, comme représenté, légèrement pivoté vers le haut.

Le positionnement du rouleau 13 et l'amplitude de basculement du support sont prévus pour que le support 1 bascule sans toucher bien sûr l'extrémité arrière du toit du véhicule et pour prendre une position inclinée ou sensiblement verticale.

En outre, dans le mode de réalisation représenté l'amplitude angulaire de pivotement du bras qui est fonction de l'extension ou de la rétraction maximale du vérin (9), le positionnement de son articulation (7) au support et la longueur de ce dernier, le tout par rapport à la hauteur du véhicule, sont choisis de manière telle que l'extrémité arrière dudit support reste à distance du plan de roulement du véhicule, en position de chargement, comme le montrent bien les figures 3 et 4 pour les raisons explicitées ci-après.

Dans la position des figures 3 et 4, on peut aisément charger le support 1 par exemple par des tubes tels que 15, 15' (figure 4), mais il pourrait s'agir de tout autre chose comme une échelle par exemple, les tubes ou autres étant bien sûr arrimés sur le support 1 par tout moyen.

Comme on peut le constater sur ladite figure 4, les tubes 15, 15' reposent au sol ce qui facilite le mouvement inverse en soulageant l'effort du vérin au départ.

En effet, pour passer de la position de chargement des figures 3 et 4 jusqu'à la position de transport de la figure 1, il suffit d'actionner le vérin en sens inverse de telle sorte que la tige 10 dudit vérin s'étende et entraîner le pivotement du bras 6 d'arrière en avant et ainsi le basculement du support 1 vers l'avant jusqu'à ce qu'il prenne la position montrée à la figure 1.

## Revendications

1. Monte-charge pour toit d'un véhicule terrestre, **caractérisé en ce qu'**il comporte un support (1) oblong de charge qui est disposé en position de transport sensiblement à l'horizontale sur le toit (2) du véhicule et qui est articulé à l'extrémité d'un bras (6) pivotant dont l'autre extrémité est articulée sur le véhicule ou sur un élément (3) fixé à celui-ci, et **en ce qu'**au moins un vérin (9) d'actionnement est aménagé sur le véhicule de manière à agir sur le bras (6) pour entraîner le pivotement dudit bras dans les deux sens, tandis qu'un moyen de guidage (13) est aménagé à l'arrière du toit (2) du véhicule de telle sorte que le pivotement du bras par l'action du vérin entraîne le basculement du support (1) qui est guidé par le moyen de guidage (13), ledit support passant ainsi selon le sens de pivotement, de la position de transport sensiblement à l'horizontale sur le toit du véhicule à une position de chargement oblique ou sensiblement verticale à l'arrière du véhicule, ou réciproquement.

2. Monte-charge selon la revendication 1, **caractérisé en ce que** l'articulation (5) du bras (6) pivotant sur le véhicule ou sur l'élément (3) fixé à celui-ci est aménagé vers l'arrière du véhicule par rapport à son articulation (7) au support (1) en position de transport, et **en ce que** le vérin (9) d'actionnement est articulé vers l'arrière et sur une partie fixe (8) par rapport au véhicule tandis que l'extrémité de sa tige (10) est articulée au bras (6) pivotant de manière telle que le pivotement d'avant en arrière et respectivement d'arrière en avant dudit bras (6), entraînant le basculement correspondant du support (1), est assuré par la rétraction de la tige (10) du vérin (9) et respectivement son extension, ledit vérin ayant un léger mouvement de pivotement en passant d'une position à l'autre.

3. Monte-charge selon la revendication 2, **caractérisé en ce qu'**une butée (12) fixe par rapport au véhicule est prévue pour limiter le pivotement du vérin (9) lorsque le support (1) est en position horizontale de transport.

4. Monte-charge selon l'une des revendications 1 à 3, **caractérisé en ce que** l'amplitude angulaire de pivotement du bras (6) qui est fonction de l'extension ou de la rétraction maximale du vérin (9), le positionnement de son articulation (7) au support et la longueur de ce dernier, le tout par rapport à la hauteur du véhicule, sont choisis de manière telle que l'extrémité arrière dudit support reste à distance du plan de roulement du véhicule, en position de chargement.

5. Monte-charge selon l'une des revendications 1 à 4, **caractérisé en ce que** le moyen de guidage du support (1) disposé à l'arrière du véhicule comporte un rouleau (13).

6. Monte-charge selon l'une des revendications 1 à 5, **caractérisé en ce que** le support (1) de charge comporte deux longerons reliés entre eux à intervalles réguliers par des barreaux.

7. Monte-charge selon l'une des revendications 2 à 6, **caractérisé en ce que** l'articulation (5) au véhicule du bras (6) pivotant, l'articulation (8) fixe du vérin (9), la butée (12) de pivotement de ce dernier et le moyen de guidage (13) du support sont aménagés sur un châssis (3) fixé sur le toit (2) du véhicule.

8. Monte-charge selon la revendication 7, **caractérisé en ce que** le châssis est constitué d'une poutre (3), ou comporte une poutre (3) de section en U.

9. Monte-charge selon l'une des revendications 7 ou 8, **caractérisé en ce que** le châssis (3) est prévu pour être disposé sur des barres (4,4') de toit installées sur le véhicule.
